# EUROPEAN PATENT APPLICATION

(11) **EP 2 338 387 A1**
(43) Date of publication of application: **29.06.2011**
(21) Application number: 09180656.2
(22) Date of filing: 23.12.2009
(51) Int. Cl.: A47J 19/02

(54) **Protection element for citrus fruit**

(71) Applicant: Riberi, Alberto, 20144 Milano (IT); Serafini, Giorgio, 20052 Monza (IT)
(72) Inventor: Riberi, Alberto, 20144 Milano (IT); Serafini, Giorgio, 20052 Monza (IT)
(74) Representative: Petraz, Gilberto Luigi

(57) **Abstract**

Protection element for citrus fruit (12) applicable to a portion in which said citrus fruit (12) is cut for manual squeezing of said citrus fruit and the extraction of juice from said citrus fruit (12). The protection element comprises a filtering net (16) able to be associated, at least temporarily in a stable manner, with an exposed inner part of said citrus fruit (12) in order to surround it completely and prevent the uncontrolled emission of juice during said squeezing, letting the juice pass but retaining inside it pips and parts of the pulp (24).

## Description

### FIELD OF THE INVENTION

The present invention concerns a protection element for citrus fruit used in the field of food and/or gastronomy and/or restaurants. In particular, the protection element according to the present invention is applied to a citrus fruit, such as a lemon, an orange, a grapefruit or other, during the manual squeezing thereof, in order to avoid various disadvantages.

### BACKGROUND OF THE INVENTION

The manual squeezing of a citrus fruit, such as a lemon, or an orange, or other, in order to extract its juice in drops so as to pour it directly, as a condiment or to correct the taste, on foodstuffs or drinks or other, is an operation that provides to cut the citrus fruit into at least two portions, and subsequently to squeeze each portion pressing the peel manually and pouring, in a controlled manner, the quantity of juice that is gradually extracted.

One disadvantage of said manual squeezing is that it is frequently accompanied by the generation of uncontrolled squirts of juice, emitted in unwanted directions, for example sideways to the desired direction.

Another disadvantage of such manual squeezing is that the pips or part of the pulp of the citrus fruit can fall into the foodstuff or drink.

Another disadvantage is that, when squeezing is finished, if the citrus fruit has not been completely squeezed, its portions are put back into the refrigerator to be used again later; therefore, it often happens that these portions dry out and become unusable, or come into contact with dust or other dirt, with evident problems of hygiene.

One purpose of the present invention is to achieve a protection element for citrus fruit which allows to prevent unwanted squirts of juice during the squeezing of the citrus fruit.

Another purpose of the present invention is to achieve a protection element for citrus fruit that allows to prevent, during squeezing, pips or parts of the pulp contained therein, from falling.

Another purpose of the present invention is to achieve a protection element for citrus fruit which allows to improve the state of preservation of a partly squeezed citrus fruit in order to allow it to be used again later.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a protection element for citrus fruit is used in the field of food and/or gastronomy and/or restaurants and is applied to one of the portions, whether it is a half or a segment, into which the citrus fruit is cut, so as to be squeezed manually and so as to extract the juice from one of said portions.

According to one feature of the present invention, the protection element comprises a filtering net suitable to be associated, at least temporarily in a stable manner, with the exposed inner part of said citrus fruit so as to surround it completely and prevent the uncontrolled emission of juice, for example toward the eyes of a person, during the squeezing of the portion of citrus fruit. In this way the filtering net lets all and only the squeezed juice pass, preventing squirts or uncontrolled emissions on the one hand, and retaining inside it pips and/or parts of the pulp on the other.

According to another feature of the present invention, one edge of the filtering net is suitable to achieve a stable coupling with the external part of the peel of the exposed inner portion of the citrus fruit.

According to another feature of the present invention, the edge is elastic so as to allow the stable application of the protection element to different shapes, sizes and types of citrus fruit. In this way it is possible to guarantee a stable and effective adherence of the protection element, that is, of the filtering net, to the portion of citrus fruit.

The filtering net according to the invention can be made of any suitable material whatsoever, for example fabric, resinous material or suchlike, advantageously suitable for use with food. Moreover, the net is advantageously of the washable type, even in the dish washer, so as to be re-used.

### BRIEF DESCRIPTION OF THE DRAWING

These and other characteristics of the present invention will become apparent from the following description of a preferential form of embodiment, given as a non-restrictive example with reference to the attached drawings wherein:
- fig. 1 is a lateral perspective view of a protection element for citrus fruit according to the present invention;
- fig. 2 is a front view of the protection element in fig. 1;
- fig. 3 is a rear perspective view of the protection element in fig. 1.

### DETAILED DESCRIPTION OF A PREFERENTIAL FORM OF EMBODIMENT

With reference to the attached drawings, a protection element 10 for citrus fruit according to the present invention is applicable to a citrus fruit and is used in the manual squeezing of the juice. In the attached drawings the protection element 10 is applied to a half of a lemon 12, although it comes within the field of the invention to apply it to segments of any size.

The protection element 10 comprises a filtering net 16, deformable and made of material suitable for use with food, for example fabric, resinous material, cotton, synthetic fibers or suchlike, substantially inert to the acidity of the citrus fruit to which it is applied. The net 16 also has a sack-like shaping able to be associated with a face, that is, the exposed inner part, of one of the halves of the lemon 12 from which the juice is extracted. This association occurs substantially by surrounding the face and coupling the net 16 annularly with a lateral edge of the lemon peel.

The filtering net 16 comprises meshes of a size such as to allow the passage of the lemon juice when the lemon 12 is squeezed, at the same time retaining the pips 22 and the parts of the pulp 24 that can come out of the lemon 12.

The protection element 10 also comprises an edge 20, at least partly elastic, disposed in an annular manner in correspondence with one end of the sack-like shaping. The elastic edge 20 is suitable to make the end of the net 16 adhere annularly with the lateral edge of the lemon peel, when the element 20 is disposed to protect the lemon 12 during squeezing.

The deformability of the net 16 and the elastic edge 20 allow the stable application of the protection element 10 to various shapes and sizes of citrus fruit.

The protection element 10 as described heretofore functions as follows.

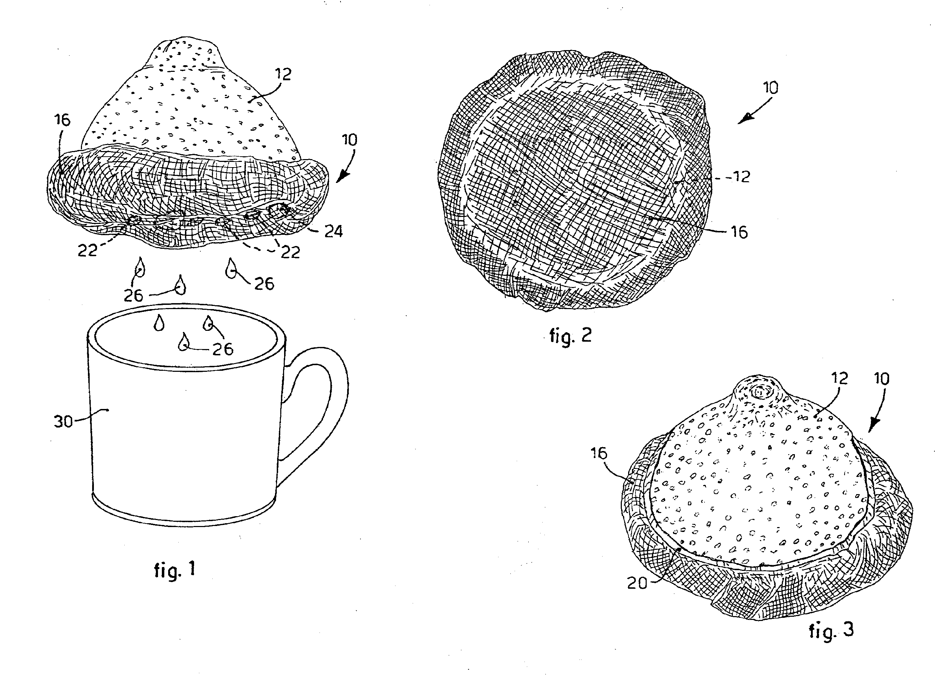

The protection element 10 is coupled with the face of one of the halves of the lemon 12 so as to surround the face of the lemon 12 and make the elastic edge 20 adhere annularly with the lemon peel. In this way the face of the lemon 12 is completely covered and protected by the net 16 (figs. 1-3).

The lemon 12 is squeezed by disposing one half of the lemon 12, to which the protection element 10 has been applied, above a container 30 (fig. 1) into which a foodstuff or drink has already been put, and squeezing the lemon 12 manually. The juice that comes out of the lemon 12, even uncontrollably, due for example to a non-homogeneous compression of the peel, is retained by the filtering net 16 so as to be made to emerge gradually in drops 26 onto the foodstuff or drink.

In this way it is possible to prevent possible unwanted squirts of lemon juice from being emitted in an uncontrolled manner during squeezing. Furthermore, the filtering net 16 allows to retain the pips 22 and parts of the pulp 24 that come out, preventing them from falling into the foodstuff or drink and allowing them to be eliminated at the end of squeezing.

Another advantage of the present invention is that the protection element 10 is also usable as a hygienic protection for the lemon 12 to prevent flies, midges or other insects from coming into direct contact with the lemon 12.

The protection element 10 can also be used with a protection function to improve the preservation in the fridge of the half of the lemon 12 already partly squeezed or a half not yet used.

It is clear that modifications and/or additions of parts may be made to the protection element for citrus fruit as described heretofore, without departing from the field and scope of the present invention.

It is also clear that, although the present invention has been described with reference to some specific examples, a person of skill in the art shall certainly be able to achieve many other equivalent forms of protection element for citrus fruit, having the characteristics as set forth in the claims and hence all coming within the field of protection defined thereby.

## Claims

1. Protection element for citrus fruit (12) applicable to a portion in which said citrus fruit (12) is cut for manual squeezing of said citrus fruit and the extraction of juice from said citrus fruit (12), **characterized in that** it comprises a filtering net (16) able to be associated, at least temporarily in a stable manner, with an exposed inner part of said citrus fruit (12) in order to surround it completely and prevent the uncontrolled emission of juice during said squeezing, letting the juice pass but retaining inside it pips (22) and parts of the pulp (24).

2. Protection element as in claim 1, **characterized in that** one edge (20) of said filtering net (16) is suitable to achieve a stable coupling with the part of the external peel of the exposed inner portion of the citrus fruit (12).

3. Protection element as in claim 2, **characterized in that** said edge (20) is elastic to allow the stable application of the protection element to different shapes, sizes and types of citrus fruit (12).

4. Protection element as in any claim hereinbefore, **characterized in that** said net (16) comprises meshes having sizes such as to retain the pips (22) and parts of the pulp (24) that come out of the citrus fruit (12) during said manual squeezing.

5. Protection element as in any claim hereinbefore, **characterized in that** it is made of material suitable for use with food.

6. Protection element as in any claim hereinbefore, **characterized in that** it is made of textile material.

7. Protection element as in claim 5, **characterized in that** it is made of resinous material.

8. Protection element as in any claim hereinbefore, **characterized in that** it is made of washable material.

9. Protection element as in any claim hereinbefore, **characterized in that** it is also able to preserve said portions of citrus fruit (12) not used or partly used.
